# EUROPÄISCHE PATENTANMELDUNG

(11) **EP 1 179 771 A2**
(43) Veröffentlichungstag der Anmeldung: **13.02.2002**
(21) Anmeldenummer: 01109835.7
(22) Anmeldetag: 23.04.2001
(51) Int. Cl.: G06F 9/44

(54) **Verfahren zur Erzeugung von Software**

(30) Priorität: 05.05.2000 DE 10021955
(71) Anmelder: Bodenseewerk Gerätetechnik GmbH, 88662 Überlingen (DE)
(72) Erfinder: Krogmann, Uwe, Dr., 88662 Überlingen (DE)
(74) Vertreter: Weisse, Jürgen, Dipl.-Phys.

(57) **Zusammenfassung**

Die Erfindung betrifft ein Verfahren zur Erzeugung von Software, die in Echtzeit einen vorgegebenen Zusammenhang zwischen einem Vektor (x) der Eingangsgrößen und einem Vektor (u) der Ausgangsgrößen realisiert. Der Erfindung liegt die Aufgabe zu Grunde, den Programmieraufwand zur Erzeugung einer den Zusammenhang herstellenden Software zu verringern. Erfindungsgemäß wird diese Aufgabe dadurch gelöst, daß (a) der Zusammenhang zwischen Eingangsgrößen und Ausgangsgrößen für eine Vielzahl von Vektorpaaren bestimmt wird, (b) eine nach einem Lernverfahren lernfähige Netzstruktur vorgesehen wird, (c) aus der Vielzahl von Vektorpaaren nacheinander Vektoren (x) von Eingangsgrößen auf die lernfähige Netzstruktur aufgeschaltet werden, (d) zu jedem solchen Vektor von Eingangsgrößen die Differenz des zugehörigen Vektors der Ausgangsgrößen und des Vektors der Ausgangsgrößen der lernfähigen Netzstruktur gebildet wird und (e) das Lernverfahren von diesen Differenzen angesteuert wird, derart daß die Netzstruktur nach Abschluß des Lernprozesses eine in Echtzeit den vorgegebenen Zusammenhang zwischen dem Vektor der Eingangsgröße und dem Vektor der Ausgangsgröße realisierende Software darstellt.

## Beschreibung

Die Erfindung betrifft ein Verfahren zur Erzeugung von Software, die in Echtzeit einen vorgegebenen Zusammenhang zwischen einem Vektor (x) der Eingangsgrößen und einem Vektor (u) der Ausgangsgrößen realisiert.

Ein solcher Zusammenhang zwischen Eingangsgrößen, die zu einem Vektor x zusammengefaßt sind, und Ausgangsgrößen, die zu einem Vektor u zusammengefaßt sind, ergibt sich z.B. bei Regelalgorithmen. Es ist dann bei einfachen Problemen häufig möglich, nach solchen Regelalgorithmen auf relativ einfache Weise zu vorgegebenen Eingangsgrößen die Ausgangsgrößen in Echtzeit zu bestimmen. Will man jedoch bei komplexen Problemen diese Zusammenhänge in Echtzeit mittels eines Prozessors realisieren, ist zur Erstellung der Software eine aufwendige Programmierung erforderlich.

Bei Regelkreisen mit sicherheitskritischer Funktion bietet die Zuverlässigkeit konventioneller Software Probleme. Softwarefehler können nicht wie bei Hardware-Anordnungen durch Redundanz ausgeschlossen werden.

Es gibt auch Fälle, wo ein Zusammenhang zwischen Eingangsgrößen und Ausgangsgrößen durch einen entsprechend programmierten Prozessor hergestellt wird. Solche Prozessoren können veralten, so daß die Hardware für die das Programm geschrieben ist, nicht mehr erhältlich ist. Für neue Hardware ist dann die Erstellung neuer, an die neue Hardware angepaßter Software erforderlich, was einen erheblichen Programmieraufwand darstellt.

Der Zusammenhang zwischen Eingangsgrößen und Ausgangsgrößen kann dabei auch über linguisitische Größen und "Falls...Dann"-Regeln hergestellt sein.

Der Erfindung liegt die Aufgabe zu Grunde, in solchen Fällen den Programmieraufwand zu verringern.

Erfindungsgemäß wird diese Aufgabe dadurch gelöst, daß
(a) der Zusammenhang zwischen Eingangsgrößen und Ausgangsgrößen für eine Vielzahl von Vektorpaaren bestimmt wird
(b) eine nach einem Lernverfahren lernfähige Netzstruktur vorgesehen wird,
(c) aus der Vielzahl von Vektorpaaren nacheinander Vektoren (x) von Eingangsgrößen auf die lernfähige Netzstruktur aufgeschaltet werden,
(d) zu jedem solchen Vektor von Eingangsgrößen die Differenz des zugehörigen Vektors der Ausgangsgrößen und des Vektors der Ausgangsgrößen der lernfähigen Netzstruktur gebildet wird und
(e) das Lernverfahren von diesen Differenzen angesteuert wird, derart daß die Netzstruktur nach Abschluß des Lernprozesses eine in Echtzeit den vorgegebenen Zusammenhang zwischen dem Vektor der Eingangsgröße und dem Vektor der Ausgangsgröße realisierende Software darstellt.

Nach der Erfindung wird die "Software" praktisch automatisch mittels eines neuronalen Netzes erstellt, das anhand der an sich bekannten und auch in konventioneller Weise programmierbaren Zusammenhänge zwischen dem Vektor x der Eingangsgrößen und dem Vektor u der Ausgangsgrößen durch Aufschaltung einer Vielzahl von Vektorpaaren trainiert wird. Normalerweise werden neuronale oder fuzzy-neuronale Netze trainiert, um nicht ohne weiteres überschaubare Zusammenhänge zu lernen, die nicht in konventioneller Weise programmiert werden können.. Bei der Erfindung geht es dagegen darum, eine Software zu erzeugen, die einen durch bekannte Algorithmen oder vorhandene Software vorgegebenen, Zusammenhang zwischen Eingangsgrößen und Ausgangsgrößen herstellt.

Ausgestaltungen der Erfinder sind Gegenstand der Unteransprüche.

Ausführungsbeispiele der Erfindung sind nachstehend unter Bezugnahme auf die zugehörigen Zeichnungen näher erläutert.
- Fig. 1: ist ein Blockdiagramm und veranschaulicht die Erzeugung der Software mittels einer lernfähigen Netzstruktur.
- Fig.2: zeigt die Funktion eines nach Fig.1 programmierten Reglers im Einsatz.
- Fig.3: zeigt eine Anordnung mit redundant vorgesehenen Sensoren und redundant vorgesehenen Reglern, die von lernfähigen Netzstrukturen gebildet und nach Fig.1 programmiert sind.

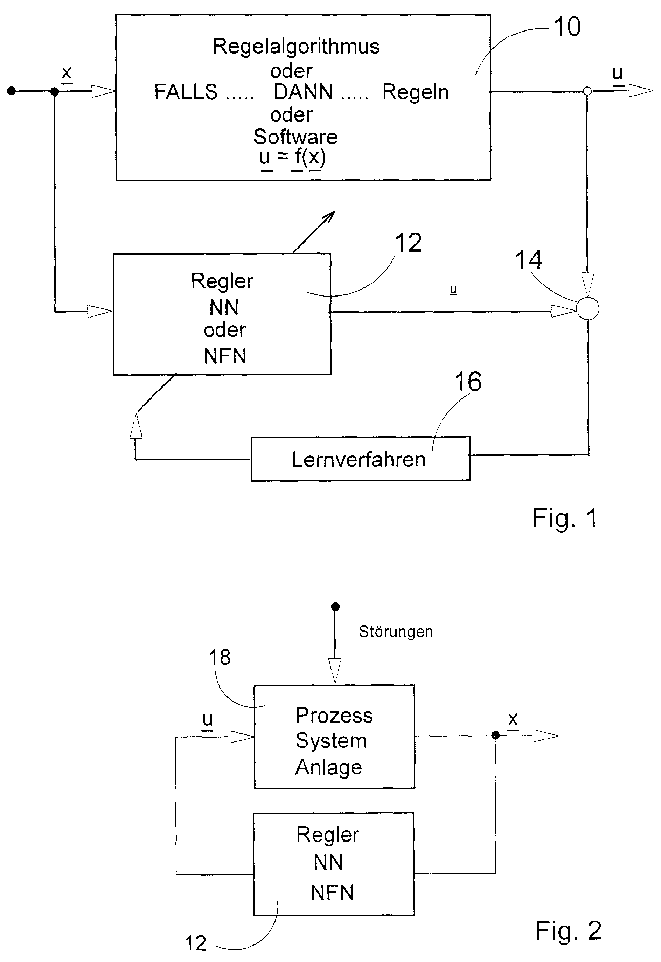

In Fig 1 ist durch einen Block 10 ein Zusammenhang zwischen einem Vektor x von Eingangsgrößen und einem Vektor u von Ausgangsgrößen bezeichnet. Es kann sich dabei um einen Regelalgorithmus handeln. Dieser kann das Ergebnis einer Reglersynthese sein. Er kann sich auch aus Erfahrungen der Praxis ergeben. Der Zusammenhang zwischen Eingangsgrößen und Ausgangsgrößen kann auch durch linguistische Größen (groß oder klein) und "Falls...Dann"-Regeln bestimmt sein. Der Zusammenhang kann aber auch durch vorhandene Programme für eine bestimmte Hardware vorgegeben werden, die einen Zusammenhang u = f(x) liefert.

Es werden eine Vielzahl von Vektorpaare mit Eingangsgröße x und Ausgangsgrößen u gebildet. Auf eine lernfähige Netzstruktur 12 werden nacheinander die verschiedenen Vektoren x der Eingangsgrößen aufgeschaltet. Die Netzstruktur liefert einen Vektor *û*

Die lernfähige Netzstruktur 12 kann ein neuronales Netz oder ein "neuro-fuzzy" Netz sein. Die Netzstruktur 12 kann dabei als Hardware z.B. als ASIC oder als NN-Chip bzw.

NFN-Chip realisiert sein. Solche Hardware-Netzstrukturen mit implementiertem Lernalgorithmus sind handelsüblich erhältlich.

In einem Summierpunkt 14 wird die Differenz des Vektors u der Ausgangsgrößen des Blocks 10 und des Ausgangsvektors *û* der lernfähigen Netzstruktur 12 gebildet. Diese Differenz steuert das Lernverfahren der lernfähigen Netzstruktur 12 an, das in Fig.1 durch einen Block 16 dargestellt ist. Das Lernverfahren wird fortgesetzt, bis bei einem vorgegebenen kleinen Wert ε die Differenz über den Gesamten Bereich hinweg *u - û ≤* ε ist.

Die so trainierte, lernfähige Netzstruktur 12 kann dann wie ein konventionell programmierter Regler eingesetzt werden. Am "Ausgang" einer Regelstrecke (Prozeß, System, Anlage) 18 ergeben sich Meßgrößen entsprechend dem Eingangsvektor x. Diese Meßgrößen sind als Eingangsvektor auf die nunmehr trainierte Netzstruktur 12 aufgeschaltet. Die trainierte Netzstruktur liefert einen Vektor von Ausgangsgrößen u, der auf die Regelstrecke 18 aufgeschaltet ist.

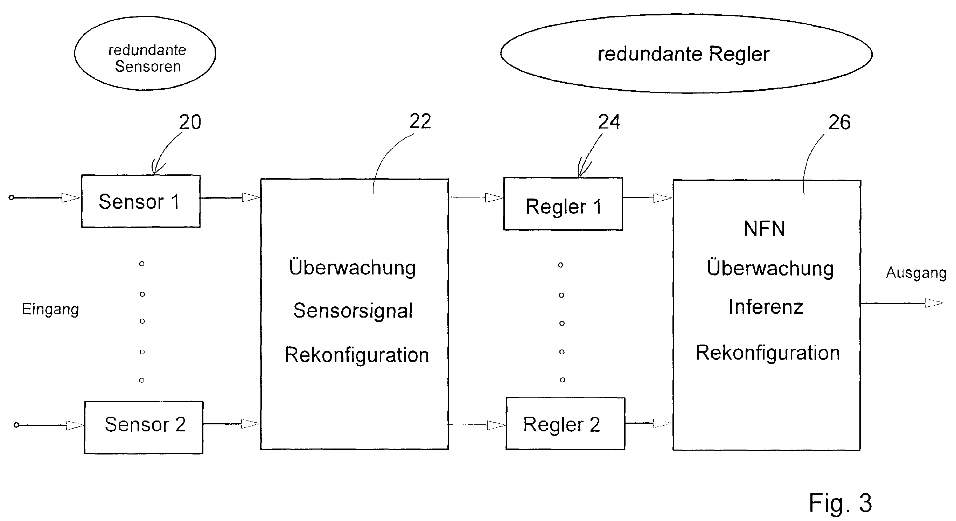

Auf diese Weise können auch redundante Regelstrukturen aufgebaut werden, wie sie in Fig.3 dargestellt sind. In Fig.3 sind Sensoren redundant vorgesehen. Diese redundanten Sensoren sind auf eine Einheit 22 zur Überwachung und ggf. Rekonfiguration der Sensorsignale aufgeschaltet. Die Sensorsignale sind als Vektoren von Eingangsgrößen x auf redundant vorgesehene Regler 24 aufgeschaltet. Die Regler sind in der beschriebenen Weise trainierte Netzstrukturen, also neuronale oder neuro-fuzzy Netze. Die Vektoren u der Ausgangsgrößen der redundanten Regler 24 sind wieder auf eine Einheit 26 zur Überwachung und ggf. Rekonfiguration der Regler 24 geschaltet.

Auf diese Weise sind die Programme für die Regelung in "Hardware" redundant vorgesehen. Die Ausgangsgrößen können im Gegensatz zu konventioneller Software wie Signale von Hardware behandelt werden, so daß die Redundanz tatsächlich eine erhöhte Sicherheit liefert. Außerdem können für die lernfähigen Strukturen der Regler 24 unterschiedliche NN- bzw. NFN-Strukturen verwendet werden, so daß eine hohe Diversifikation struktureller Art gegeben ist.

## Patentansprüche

1. Verfahren zur Erzeugung von Software, die in Echtzeit einen vorgegebenen Zusammenhang zwischen einem Vektor (x) der Eingangsgrößen und einem Vektor (u) der Ausgangsgrößen realisiert **dadurch gekennzeichnet, daß**
(a) der Zusammenhang zwischen Eingangsgrößen (x) und Ausgangsgrößen (u) für eine Vielzahl von Vektorpaaren bestimmt wird
(b) eine nach einem Lernverfahren (16) lernfähige Netzstruktur (12) vorgesehen wird,
(c) aus der Vielzahl von Vektorpaaren nacheinander Vektoren (x) von Eingangsgrößen auf die lernfähige Netzstruktur (12) aufgeschaltet werden,
(d) zu jedem solchen Vektor (x) von Eingangsgrößen die Differenz des zugehörigen Vektors der Ausgangsgrößen (u) und des Vektors *û* der Ausgangsgrößen der lernfähigen Netzstruktur (12) gebildet wird und
(e) das Lernverfahren (16) von diesen Differenzen angesteuert wird, derart daß die Netzstruktur (12) nach Abschluß des Lernprozesses eine in Echtzeit den vorgegebenen Zusammenhang zwischen dem Vektor (x) der Eingangsgrößen und dem Vektor (u) der Ausgangsgrößen realisierende Software darstellt.

2. Verfahren nach Anspruch 1, **dadurch gekennzeichnet, daß** als lernfähige Netzstruktur (12) ein neuronales Netz vorgesehen ist.

3. Verfahren nach Anspruch 1, **dadurch gekennzeichnet, daß** als lernfähige Netzstruktur (12) ein fuzzy-neuronales Netz vorgesehen ist.

4. Verfahren nach einem der Ansprüche 1 bis 3, **dadurch gekennzeichnet, daß** die lernfähige Netzstruktur (12) als Hardware vorgesehen wird.

5. Verfahren nach einem der Ansprüche 1 bis 4, **dadurch gekennzeichnet, daß** der Zusammenhang zwischen dem Vektor (x) der Eingangsgrößen und dem Vektor (u) der Ausgangsgrößen durch einen Algorithmus dargestellt wird.

6. Verfahren nach einem der Ansprüche 1 bis 4, **dadurch gekennzeichnet, daß** der Zusammenhang zwischen dem Vektor (x) der Eingangsgrößen und dem Vektor (u) der Ausgangsgrößen durch linguistische Größen und "Falls...Dann"-Regeln dargestellt wird.

7. Verfahren nach einem der Ansprüche 1 bis 4, **dadurch gekennzeichnet, daß** der Zusammenhang zwischen dem Vektor (x) der Eingangsgrößen und dem Vektor (u) der Ausgangsgrößen durch ein vorhandenes Programm dargestellt wird.

8. Regelvorrichtung unter Verwendung von Reglern (24), die von trainierten lernfähigen Netzstrukturen (12) nach einem der Ansprüche 1 bis 7 gebildet sind, **dadurch gekennzeichnet, daß** die lernfähigen Netzstrukturen (12) in der Regelvorrichtung redundant vorgesehen sind.

9. Regelvorrichtung nach Anspruch 8, **dadurch gekennzeichnet, daß** eine Einheit (26) zur Überwachung und ggf. Rekonfiguration der Regler (24) vorgesehen ist.

10. Regelvorrichtung nach Anspruch 8 oder 9, **dadurch gekennzeichnet, daß** wenigstens einige der redundant vorgesehenen lernfähigen Netzstrukturen (12) unterschiedliche Hardware-Konfigurationen aufweisen.
